# EUROPÄISCHE PATENTSCHRIFT

(11) **EP 0 454 976 B1**
(45) Veröffentlichungstag und Bekanntmachung des Hinweises auf die Patenterteilung: **23.08.1995**
(21) Anmeldenummer: 91103952.7
(22) Anmeldetag: 14.03.1991
(51) Int. Cl.: F16L 47/04

(54) **Vorrichtung zum Verbinden eines Kunststoffrohres mit einem weiteren Rohr**
Connecting device between a pipe of plastic material and another pipe
Dispositif pour relier un tuyau en matière synthétique à un autre tuyau

(30) Priorität: 30.04.1990 DE 9004907 U
(43) Veröffentlichungstag der Anmeldung: 06.11.1991
(73) Patentinhaber: Schmitz, Johannes, Dr.-Ing., D-52428 Jülich (DE); Schmitz-Stotz, Patricia, Dipl.-Ing., D-52428 Jülich (DE)
(72) Erfinder: Schmitz, Johannes, Dr.-Ing., D-52428 Jülich (DE); Schmitz-Stotz, Patricia, Dipl.-Ing., D-52428 Jülich (DE)
(74) Vertreter: Mayer-Pohske, Joachim-Wolfgang Rechtsanwälte Dr. Dettmeier & Partner

(56) Entgegenhaltungen:
- DE-A- 3 832 733
- DE-B- 2 054 560
- DE-U- 7 434 125
- US-A- 3 493 250
- US-A- 3 881 754

## Beschreibung

Die Erfindung betrifft eine Vorrichtung zum Verbinden eines Kunststoffrohres nach dem Oberbegriff des Patentanspruchs 1.

Einrichtungen dieser Art sind weit verbreitet im Einsatz und haben sich bei der Verbindung von Metallrohren gut bewährt. Sie sind u.a. bekannt geworden unter der im Handel üblichen Bezeichnung "Ermeto-Verschraubung".

Die bekannte Rohrverbindung hat sich besonders zum Verbinden von Metallrohren mit ausreichendem Wandquerschnitt bewährt. Sie versagt jedoch, sobald man Metallrohre mit sehr dünnem Wandquerschnitt oder Kunststoffrohre miteinander oder auch Kunststoffrohre und Metallrohre miteinander verbinden möchte. Hierbei hat es sich jeweils gezeigt, daß jenes Rohr, dessen Wandung dem Zusammenpressen des Druckringes keinen ausreichenden Widerstand entgegenzusetzen vermag, eine Undichtigkeit der Rohrverbindung bewirkte.

Es ist weiter mit dem DE-GM 74 34 125.6 eine Rohrverbindung bekannt geworden, zur Verbindung eines Kunststoffrohres mit einem Metallrohr, bei der ein Kunststoffrohrende mit einem eingeschobenen konischen Stützröhrchen in ein Nippelgehäuse eingesteckt und mittels eines aufgeschobenen Klemmringes und einer Überwurfmutter abgedichtet festgeklemmt ist. Die Mutter bildet einen stirnseitigen Anschlag für das Rohrende und den Stützring. Der Klemmring wird über Kegelflächen an Überwurfmutter und Nippel radial verquetscht.

Die Einzelteile dieser Verbindung sind teuer in der Herstellung. Bei dem Klemmring wird bei der Verquetschung eine Bohrungskante in die Rohroberfläche eingeschnitten und das Rohr damit verletzt. Eine Querschnittsverengung des Duchflußquerschnitts im Bereich der Verbindung ist unvermeidbar.

Weiter ist mit der DE-OS 38 32 733 eine Rohrverbindung der eingangs beschriebenen Art bekannt geworden, bei welcher durch einen metallischen Innenring, welcher durch ein Hilfswerkzeug aufgeweitet wird, eine dauerhafte Verbindung zwischen dem thermoplastischen Rohr und dem zu verbindenden Teil entsteht. Hierbei wird das Rohr im Bereich des metallischen Innenringes außen von einem zylindrischen Rohrstück umfaßt, dessen Festigkeit der vom aufgeweiteten Innenrohr ausgehenden Anpreßkraft widerstehen kann. Zur Abdichtung ist ein zusätzlicher O-Ring erforderlich. Die Verbindungskraft ist nicht von der Anzugskraft der Überwurfmutter beinflußbar, sondern hängt nur ab von der Kraft des aufgeweiteten Innenringes und der hierdurch erzielten Dehnung des Rohres, wodurch entsprechende Kräfte am äußeren Rohrstück entstehen. Damit eine vorhersagbare und befriedigende Verbindungsfestigkeit entsteht, muß das Rohr entsprechend dehnfähig und der Innendurchmesser des äußeren Rohrstückes sehr eng toleriert sein, was eine entsprechend enge Maßtoleranz des Rohres erzwingt. Ist der Innendurchmesser des äußeren Rohrstückes zu groß, wird das Rohr vom Innenring gedehnt, ohne daß eine haltende Gegenkraft entsteht.

Weiter ist mit der DE-B-2 054 560 eine Verbindungsvorrichtung der eingangs beschriebenen Art bekannt, die jedoch sehr teuer in der Herstellung ist. Der Nippel muß eine durchgehende und vielfach abgesetzte Bohrung aufweisen. Die Stirnseite und der entsprechende Flansch der Überwurfmutter sind kegelig ausgebildet. Die Stützhülse muß sowohl im Nippel als auch im Rohr anliegen und erzwingt daher eine nicht unbeträchtliche Baulänge. Im Abstützbereich ist sie am gesamten Umfang radial einwärts verformt, was die Herstellung verteuert und den Strömungsquerschnitt zusätzlich verengt. Zur Herstellung einer dichten Verbindung ist eine entsprechend große, radial nach innen gerichtete Verformung des Rohres durch den Dichtring notwendig, wobei diese Verformungsgröße jedoch nicht kontrolliert werden kann. Bei dünnen Wandstärken ist der verformte Bereich außerdem durch Abscherung an den Kanten gefährdet.
Die US-A-3,881,754 beschreibt eine Rohrverbindung mit einer Stützhülse. Diese Verbindung ist aber mit dein Anmeldungsgegenstand nicht vergleichbar, da bei ihr die Stützhülsen verformbar ist.
Daraus ergibt sich die Aufgabe für die vorliegende Erfindung, die bekannte Rohrverbindung in der Weise weiterzuentwickeln und zu verbessern, daß eine druckdichte Verbindung für gasförmige und flüssige Medien auch dann erzielt werden kann, wenn Rohre mit dünnen Wandstärken und/oder Metall- und Kunststoffrohre oder Kunststoffrohre miteinander verbunden werden sollen. Die verbesserte Rohrverbindung soll einfach, robust, dauerhaft und preisgünstig sein. Die äußere Oberfläche des Rohres soll im Verbindungsbereich unverletzt bleiben.

Diese Aufgabe wird durch die Merkmale von Patentanspruch 1 gelöst. In dieser Anordnung ist der Außenflansch dazu geeignet, den Druck der auf den Nippel aufzuschraubenden Überwurfmutter gleichmäßig auf den Dichtring zu übertragen. Unter dem Druck legt sich der Ring aus weicherem Werkstoff auf die Stirnseite des Nippels und verformt sich gleichzeitig auch in radialer Richtung nach außen und nach innen. Damit sich diese nach innen gerichtete Verformung in der weichen Wandung des zu verbindenden Rohres nicht fortsetzt, ist eine ringförmige Stützhülse vorgesehen und innerhalb des Öffnungsquerschnitts des Rohres an der Stelle radial unterhalb des Ringes aus weicherem Werkstoff angeordnet. Die Stützhülse verhindert also das Verformen des Rohres unter dem Druck, den die Überwurfmutter über die Druckhülse auf den weichen Ring ausübt. Damit kann auf der Innennseite dieses Ringes auch die Dichtheit der Rohrverbindung in axialer Richtung erzeugt werden.

Besonders für die Anwendung bei Kunststoffrohren kann die Stützhülse zwei Längenabschnitte aufweisen, die unterschiedliche Formen haben. Der eine Längenabschnitt ist zylinder- und der andere Längenabschnitt kegelförmig, wobei der geringere Durchmesser des kegelförmigen Abschnitts einer der Stirnseiten der Stützhülse zugeordnet ist. Die beiden Längenabschnitte sind annähernd gleich lang. Zumindest der Außendurchmesser des zylindrischen Längenabschnitts kann größer sein als der Durchmesser des Öffnungsquerschnitts des zu verbindenden Rohres. Zum Einführen der Stützhülse in das Rohr wird dieses z.B. erwärmt. Die Stützhülse wird in das durch das Erwärmen erweichte Rohr eingeführt, welches sich nach dem Erkalten über der Stützhülse zusammenzieht und diese somit fest und sicher an ihrem vorbestimmten Platz innerhalb des Rohres fixiert. Die Tiefe, bis zu welcher die Stützhülse in das zu verbindende Rohr eingeführt werden muß, wird vorher konstruktiv festgelegt. Die lichte Weite der Stützhülse kann nun der lichten Weite des Rohres entsprechen.

Einfacher ist es jedoch, den Stützring zu erwärmen und warm in das Rohr einzusetzen. Unter der Wärme des Stützrings wird das Rohr jeweils örtlich weich, so daß der Stützring problemlos an Ort und Stelle geschoben werden kann. Gleichzeitig ist die bei einem über die gesamte Einführungslänge erwärmte Rohr bestehende Gefahr des Ausknickens vermieden.
Weitere vorteilhafte Ausgestaltungen der Erfindung ergeben sich aus den Unteransprüchen.

Nachfolgend wird die Neuerung an einem Ausführungsbeispiel näher beschrieben. Es zeigen jeweils in unterschiedlichen Maßstäben die
- Figur 1: einen Längsschnitt durch einen Teil eines Rohrverbinders,
- Figur 2: einen Längsschnitt durch einen Nippel,

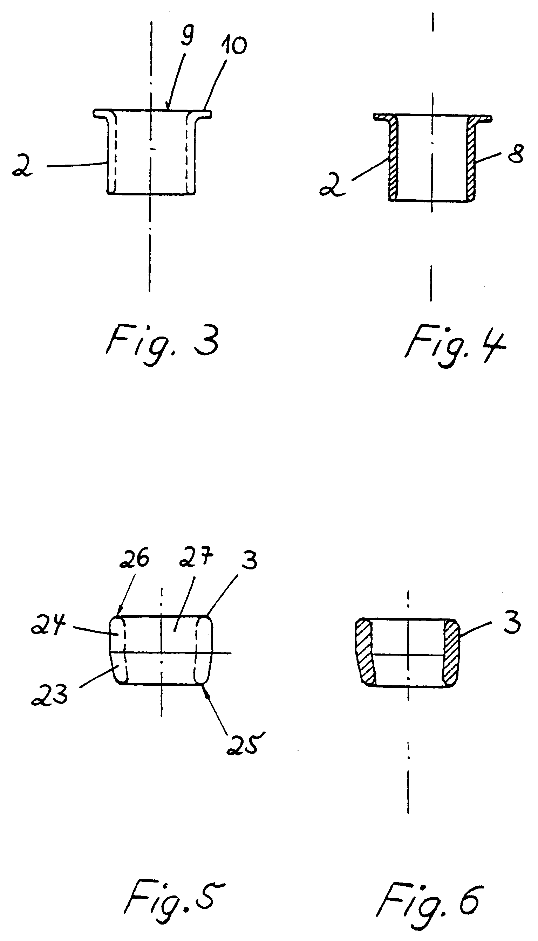

- Figur 3: die Ansicht einer Druckhülse,
- Figur 4: den Längsschnitt durch eine Druckhülse,
- Figur 5: die Ansicht einer Stützhülse und
- Figur 6: den Längsschnitt durch eine Stützhülse.

Über die Außenseite 7 des zu verbindenden Rohres 1 ist zunächst eine Überwurfmutter 5 und sodann eine zylinderförmige Druckhülse 2 gestülpt. Die zylinderförmige Druckhülse 2 hat eine zylindrische Hülse 8 deren eine Stirnseite 9 zu einem ringförmigen Außenflansch 10 aufgeweitet ist. Mit ihrer zylindrischen Hülse 8 erstreckt sich die Druckhülse 2 durch die innere Öffnung 11 des Innenflansches 12 der Überwurfmutter 5. In dieser Position kann die zylindische Hülse auch leicht kegelig aufgeweitet werden, so daß sie nicht mehr herausnehmbar ist und somit Überwurfmutter und Druckhülse eine Einheit bilden. Hierdurch wird die Gesamtmontage erleichtert.

Die Überwurfmutter 5 ist dazu vorgesehen, mit einem Nippel 6 verschraubt zu werden. Zu diesem Zweck ist an der Überwurfmutter 5 ein Innengewinde 13 und auf dem Nippel 6 ein Außengewinde 14 vorgesehen. Das Innengewinde 13 und das Außengewinde 14 erstrecken sich jeweils über einen Abschnitt der axialen Länge der Überwurfmutter 5 bzw. den Nipppel 6. Zum Angreifen von Werkzeugen (nicht gezeigt) sind auf der Außenseite 15 der Überwurfmutter 5 wie auf der Außenseite 16 des Nippels 6 an sich bekannte Schlüsselflächen (nicht gezeigt) vorgesehen. Zum Verschrauben wird der Nippel 6 mit seiner Innenseite 17 auf der Außenseite 7 des Rohres 1 von dessen äußerem Ende 18 her aufgezogen.

Zwischen dem Ende 18 des zu verbindenden Rohres 1 und der Stirnseite 9 des Außenflansches 10 der Druckhülse 2 ist ein Dichtring 4 vorgesehen. Der Ring 4 besteht aus einem Werkstoff, welcher weicher ist als die Werkstoffe, aus denen die Überwurfmutter 5 bzw. der Nippel 6 bestehen. Der Ring 4 besteht beispielsweise aus Weichmetall oder Kunststoff oder Gummi. Der Ring 4 weist auf seiner dem Außenflansch 10 der Druckhülse 2 zugekehrten Stirnseite eine Gleitschicht 19 auf, die dazu vorgesehen ist, die Reibung zwischen dem Außenflansch 10 und der Druckhülse 2 zu verringern, wenn die Überwurfmutter 5 mit dem Nippel 6 verschraubt wird. Auf diese Gleitschicht kann jedoch in der Regel verzichtet werden.

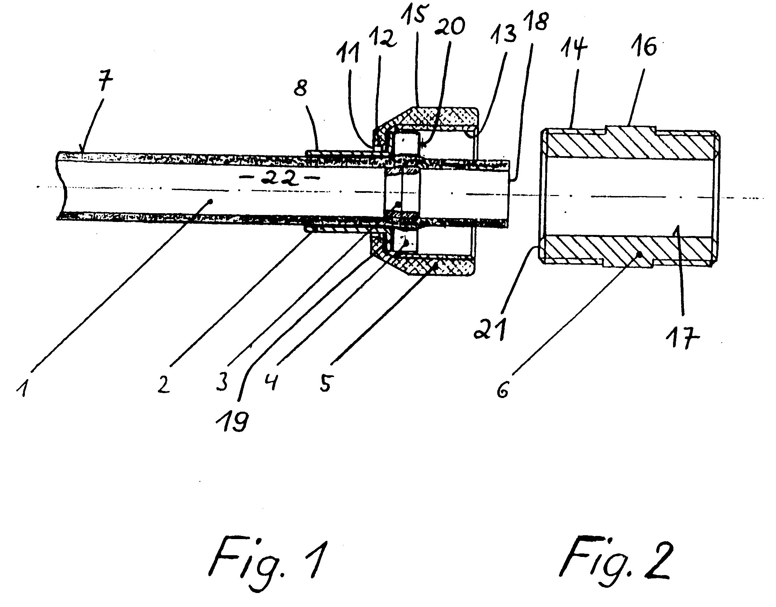

Beim Verschrauben der Überwurfmutter 5 mit dem Nippel 6 wird die der Gleitschicht 19 gegenüberliegende ringförmige Stirnseite 20 des Ringes 4 zuerst an der dem Ende 18 des zu verschraubenden Rohres 1 zugekehrten Stirnseite 21 des Nippels 6 zur Anlage gebracht und anschließend beim Anziehen der Überwurfmutter 5 abdichtend dagegengepreßt. Beim Zusammenpressen wird der Ring 4, der, wie man in der Figur 1 sieht, einen rechteckigen Querschnitt hat, gleichzeitig dichtend gegen die Außenseite 7 des zu verbindenden Rohres 1 gepreßt.

Damit sich das zu verbindende Rohr 1 unter der Preßwirkung des Ringes 4 nicht verformt, ist innerhalb des Querschnitts 22 des Rohres 1 eine Stützhülse 3 angeordnet. Die Stützhülse 3 ist genau unterhalb des Ringes 4 angeordnet. Sie ist etwas länger als die axiale Breite des Ringes 4 und kann aus zwei Längenabschnitten 23 und 24 bestehen. Der eine Längenabschnitt 23 ist kegelig und der andere Längenabschnitt 24 zylindrisch, wobei die beiden Längenabschnitte 23 und 24 etwa die gleiche axiale Länge haben. Die Stützhülse kann aber auch insgesamt kegelig sein. Außerdem sind die Stirnseiten 25 und 26 der Stützhülse 3 deutlich abgerundet.

Die Stützhülse 3 besteht aus Metall oder Kunststoff. Sie hat eine durchgehende Querschnittsöffnung 27, die zwar rund ist, sich aber in der gleichen Richtung wie der kegelige Längenabschnitt 23 verjüngt. Vor dem Zusammenbau der Rohrverbindung wird das Ende 18 des Rohres 1 erwärmt, so daß es weich wird, und die Stützhülse 3 wird mit dem kegeligen Längenabschnitt 23 voran in den Querschnitt 22 des Rohres 1 eingeführt. Es kann auch, wie eingangs beschrieben , anstelle des Rohres die Stützhülse 3 erwärmt werden.

Die Stützhülse 3 wird mindestens so tief in das Ende 18 des Rohres 1 eingeführt, wie der axialen Länge des späteren Sitzes des Ringes 4 vom Ende 18 aus gemessen entspricht. Das erkaltende Rohr 1 zieht sich über der Stützhülse zusammen und hält sie fest und unverrückbar an ihrer vorgegebenen Stelle innerhalb des Querschnitts 22. Hierbei kann die Stützhülse 3 so weit eingeschoben sein, daß, wie dargestellt, ein freies Rohrende übersteht.

Beim weiteren Zusammenbau des Rohrverbinders wird zunächst die Überwurfmutter 5 mit ihrer inneren Öffnung 11 über die Außenseite 7 des Rohres 1 geschoben, wobei das Innengewinde 13 zum Ende 18 des Rohres 1 hinweist. Es folgt die Druckhülse 2 mit der zylindrischen Hülse 8 voraus, die mit leichtem Spiel auf der Außenseite 7 des Rohres 1 entlang- und durch die innere Öffnung 11 der Überwurfmutter 5 hindurchgleitet. Dabei kommt der Außenflansch 10 der Druckhülse 2 zur Anlage auf der axialen Innenseite des Innenflansches 12. Darauf folgt der Ring 4 aus weichem Werkstoff. Ist allerdings eine Aufweitung durch eine Stützhülse 3 zu erwarten, so empfiehlt sich, die Überwurfmutter in der beschriebenen Weise aufzusetzen bevor die Stützhülse eingesetzt wird. Zum Schluß wird der Nippel 6 mit seiner zylindrischen Innenseite 17 über die Außenseite 7 des Endes 18 des zu verbindenden Rohres 1 geschoben und mit der Überwurfmutter 5 verschraubt. Beim Verschrauben wird der weiche Ring 4 unter anderem durch die Wandung des Rohres 1 hindurch von außen gegen die Stützhülse gepreßt, so daß er neben der Abdichtung des Rohrverbinders auf der Außenseite 7 des Rohres diesen auch gleichzeitig an der konstruktiv vorgegebenen Stelle der Stützhülse 3 am Rohr 1 befestigt.

Damit der Ring 4 beim Zusammenschrauben von Überwurfmutter 5 und Nippel 6 am Innenflansch 12 keinen Schaden nehmen kann, gleitet die Druckhülse 2 mit ihrem Außenflansch 10 über die Gleitschicht 19 des Ringes 4 und mit ihrem zylindrischen Schaft 8 auf der Außenseite 7 des Rohres 1. Es kann aber auch so eingerichtet werden, daß der Innenflansch 12 auf dem stillstehenden ringförmigen Außenflansch 10 gleitet.

Mit Hilfe des erfindungsgemäßen Rohrverbinders können beispielsweise zwei gleiche Rohre aus Kunststoff oder dünnem Metall miteinander verbunden werden. Es kann aber auch ein Kunststoffrohr mit einem Metallrohr verbunden werden, wobei das letztere dick- oder dünnwandig sein kann. Schließlich kann das zu verbindende Rohr 1 mit rundem Querschnitt mit einem anderen Rohr verbunden werden, das irgendeinen anderen Querschnitt hat und mit dem Nippel 6 verbunden werden kann. Der Nippel 6 kann natürlich auch dazu dienen, das Rohr 1 nicht mit einem weiteren Rohr, sondern mit irgend einem anderen Bauteil zu verbinden. Hierzu ist lediglich notwendig, daß der Nippel 6 mit seinem dem Rohr 1 abgewandten Gewinde dichtend in dieses andere Bauteil eingesetzt ist.

### Liste der verwendeten Bezugszeichen

- 1: zu verbindendes Rohr
- 2: zylinderförmige Druckhülse
- 3: Stützhülse
- 4: Dichtring
- 5: Überwurfmutter
- 6: Nippel
- 7: Außenseite
- 8: zylindrische Hülse
- 9: Stirnseite der zylindrischen Hülse
- 10: ringförmiger Außenflansch
- 11: innere Öffnung
- 12: Innenflansch
- 13: Innengewinde
- 14: Außengewinde
- 15: Außenseite Überwurfmutter
- 16: Außenseite Muffe
- 17: Innenseite Muffe
- 18: Ende Rohr
- 19: Gleitschicht
- 20: Stirnseite Ring
- 21: Stirnseite Muffe
- 22: Querschnitt Rohr
- 23: kegeliger Längenabschnitt
- 24: zylindrischer Längenabschnitt
- 25: Stirnseite
- 26: Stirnseite
- 27: durchgehende Querschnittsöffnung

## Patentansprüche

1. Vorrichtung zum Verbinden eines Kunststoffrohres (1) mit rundem Querschnitt mit einem weiteren Rohr oder Anschlußstück weiterer Bauteile mit einem Nippel (6) und mindestens einer dein Nippel zugeordneten Überwurfmutter (5), wobei im Inneren der Überwurfmutter (5) ein Dichtring (4) vorgesehen ist und wobei Überwurfmutter (5), Dichtring (4) und Nippel (6) je eine Durchgangsbohrung für die Durchführung eines Rohres (1) oder Anschlußstückes aufweisen, wobei der Dichtring (4) aus elastisch oder plastisch leicht verformbarem Werkstoff besteht und zwischen einem eine innere Öffnung (11) für ein Rohr (1) aufweisenden Innenflansch (12) der Überwurfmutter (5) und einer Stirnseite (21) des Nippels (6) je plane Gegenflächen vorgesehen sind, wobei weiter eine unverformte Stützhülse (3), die mindestens gleich lang wie die axiale Breite des Dichtringes (4) ist, vorgesehen ist, dadurch gekennzeichnet, daß ein ringförmiger Außenflansch (10) einer Druckhülse (2) zwischen Dichtung (4) und Innenflansch (12) der Überwurfmutter (5) angeordnet ist, wobei der Innenflansch (12) der Überwurfmutter (5) auf dem Außenflansch (10) der Druckhülse (2) gleitet.

2. Vorrichtung nach Anspruch 1, dadurch gekennzeichnet, daß wenigstens die Außenseite der Stützhülse (3) zwei unterschiedliche Längenabschnitte (23, 24) aufweist.

3. Vorrichtung nach Anspruch 2, dadurch gekennzeichnet, daß einer der Längenabschnitte (24) der Außenseite der Stützhülse (3) zylinderförmig und der andere Längenabschnitt (23) kegelförmig ausgebildet ist.

4. Vorrichtung nach Anspruch 3, dadurch gekennzeichnet, daß wenigstens der kegelförmige Längenabschnitt (23) der Außenseite der Stützhülse (3) halb so lang ist wie die axiale Länge der Stützhülse (3).

5. Vorrichtung nach einem der Ansprüche 3 und 4, dadurch gekennzeichnet, daß der den kleineren Außendurchmesser aufweisende Teil des kegelförmigen Längenabschnitts (23) der Stützhülse (3) der angrenzenden Stirnseite der Stützhülse (3) zugewandt ist.

6. Vorrichtung nach einem der Ansprüche 2 bis 5, dadurch gekennzeichnet, daß der äußere Rand von wenigstens einer der Stirnseiten (25,26) der Stützhülse (3) eine Abrundung aufweist.

7. Vorrichtung nach einem der Ansprüche 2 bis 6, dadurch gekennzeichnet, daß der innere Rand von wenigstens einer der Stirnseiten (25,26) der Stützhülse (3) eine Abrundung aufweist.

8. Vorrichtung nach einem der Ansprüche 1 bis 7, dadurch gekennzeichnet, daß der ringförmige Außenflansch (10) einer Druckhülse (2) zwischen Dichtring (4) und Innenflansch (12) der Überwurfmutter angeordnet ist.

9. Vorrichtung nach Anspruch 2, dadurch gekennzeichnet, daß die Innenseite der durchgehenden Querschnittsöffnung (27) der Stützhülse (3) zwei unterschiedliche Längenabschnitte aufweist.

10. Vorrichtung nach Anspruch 9, dadurch gekennzeichnet, daß einer der Längenabschnitte der Innenseite der durchgehenden Querschnittsöffnung (27) zylinderförmig und der andere Längenabschnitt kegelförmig ausgebildet ist.

11. Vorrichtung nach Anspruch 10, dadurch gekennzeichnet, daß die beiden Längenabschnitte (23,24) annähernd die gleiche axiale Länge haben.

12. Vorrichtung nach einem der Ansprüche 10 bis 11, dadurch gekennzeichnet, daß der kegelförmige Innenabschnitt der Querschnittsöffnung (27) in gleicher Richtung unterhalb des kegelförmigen Längenabschnitts (23) der Außenseite der Stützhülse (3) angeordnet ist.

13. Vorrichtung nach einem der Ansprüche 1 bis 12, dadurch gekennzeichnet, daß der stirnseitige Rand (9) des Außenflansches (10) der zylinderförmigen Druckhülse (2) eine Gleitschicht aufweist.

14. Vorrichtung nach einen der Ansprüche 1 bis 13, dadurch gekennzeichnet, daß die Außenränder der Druckhülse (2) eine Abrundung aufweisen.

15. Vorrichtung nach Anspruch 1, dadurch gekennzeichnet, daß der dem Innengewinde (13) zugewandte innere Rand der inneren Öffnung (11) des Innenflansches (12) der Überwurfmutter (5) eine Abschrägung aufweist.

16. Vorrichtung nach Anspruch 1, dadurch gekennzeichnet, daß der Durchmesser der inneren Öffnung (11) des Innenflansches (12) der Überwurfmutter (5) zumindest geringfügig größer ist als der Außendurchmesser der Druckhülse (2).

17. Vorrichtung nach Anspruch 1, dadurch gekennzeichnet, daß der Nippel (6) auf der Außenseite (16) wenigstens eine Mitnahmefläche aufweist.

18. Vorrichtung nach Anspruch 17, dadurch gekennzeichnet, daß die Mitnahmefläche eine Schlüsselfläche oder eine zum Eingriff eines Schlüssels geeignete Bohrung ist.

19. Vorrichtung nach Anspruch 17, dadurch gekennzeichnet, daß die Mitnahmefläche in der axialen Mitte zwischen zwei Außengewinden (14) des Nippels (6) angeordnet ist.

20. Vorrichtung nach Anspruch 1, dadurch gekennzeichnet, daß die Überwurfmutter (5) auf der Außenseite (15) wenigstens eine Mitnahmefläche aufweist.

21. Vorrichtung nach Anspruch 20, dadurch gekennzeichnet, daß die Mitnahmefläche (15) eine Schlüsselfläche oder eine zum Eingriff eines Schlüssels geeignete Bohrung ist.

22. Vorrichtung nach Anspruch 1, dadurch gekennzeichnet, daß der Nippel (6) aus Metall oder Kunststoff ist.

23. Vorrichtung nach Anspruch 1, dadurch gekennzeichnet, daß die Überwurfmutter (5) aus Metall oder Kunststoff ist.

## Claims

1. Connecting device between a pipe (1) of plastic material with a round cross section and another pipe or connecting piece of further components with a nipple (6) and at least one union nut (5) allocated to the nipple, wherein on the inside of the union nut (5) a sealing ring (4) is provided and wherein the union nut (5), sealing ring (4) and nipple (6) each comprise a through bore for the guidance of a pipe (1) or connecting piece, wherein the sealing ring (4) consists of easily elastically or plastically deformable material and between an inner flange (12) of the union nut (5), comprising an inner opening (11) for a pipe (1), and a front end (21) of the nipple (6) respective flat counter surfaces are provided, wherein, furthermore, a non-deformed support sleeve (3), which is at least as long as the axial width of the sealing ring (4) is provided, characterised in that an annular outer flange (10) of a pressure sleeve (2) is disposed between the sealing ring (4) and the inner flange (12) of the union nut (5), wherein the inner flange (12) of the union nut (5) slides on the outer flange (10) of the pressure sleeve (2).

2. Device according to claim 1, characterised in that at least the outside of the support sleeve (3) comprises two different longitudinal portions (23, 24).

3. Device according to claim 2, characterised in that one of the longitudinal portions (24) of the outside of the support sleeve (3) is cylindrical and the other longitudinal portion (23) is conical.

4. Device according to claim 3, characterised in that at least the conical longitudinal portion (23) of the outside of the support sleeve (3) is half as long as the axial length of the support sleeve (3).

5. Device according to either of claims 3 and 4, characterised in that the smaller diameter part of the conical longitudinal portion (23) of the support sleeve (3) faces the adjoining front end of the support sleeve (3).

6. Device according to any of claims 2 to 5, characterised in that the outer edge of at least one of the front ends (25, 26) of the support sleeve (3) is rounded-off.

7. Device according to any of claims 2 to 6, characterised in that the inner edge of at least one of the front ends (25, 26) of the support sleeve (3) is rounded-off.

8. Device according to any of claims 1 to 7, characterised in that the annular outer flange (10) of a pressure sleeve (2) is disposed between the sealing ring (4) and the inner flange (12) of the union nut.

9. Device according to claim 2, characterised in that the inside of the through cross-sectional opening (27) of the support sleeve (3) comprises two different longitudinal portions.

10. Device according to claim 9, characterised in that one of the longitudinal portions of the inside of the through cross-sectional opening (27) is cylindrical and the other longitudinal portion is conical.

11. Device according to claim 10, characterised in that the two longitudinal portions (23, 24) are of almost the same axial length.

12. Device according to any of claims 10 to 11, characterised in that the conical inner portion of the cross-sectional opening (27) is disposed in the same direction below the conical longitudinal portion (23) of the outside of the support sleeve (3).

13. Device according to any of claims 1 to 12, characterised in that the front end edge (9) of the outer flange (10) of the cylindrical pressure sleeve (2) has a slide layer.

14. Device according to any of claims 1 to 13, characterised in that the outer edges of the pressure sleeve (2) are rounded-off.

15. Device according to claim 1, characterised in that the inner edge, facing the inner thread (13), of the inner opening (11) of the inner flange (12) of the union nut (5) is chamfered.

16. Device according to claim 1, characterised in that the diameter of the inner opening (11) of the inner flange (12) of the union nut (5) is at least slightly larger than the outer diameter of the pressure sleeve (2).

17. Device according to claim 1, characterised in that the nipple (6) comprises at least one engaging surface on the outside (16).

18. Device according to claim 17, characterised in that the engaging surface is a key surface or a bore suitable for the engagement of a key.

19. Device according to claim 17, characterised in that the engaging surface is disposed in the axial centre between two outer threads (14) of the nipple (6).

20. Device according to claim 1, characterised in that the union nut (5) comprises at least one engaging surface on the outside (15).

21. Device according to claim 20, characterised in that the engaging surface (15) is a key surface or a bore suitable for the engagement of a key.

22. Device according to claim 1, characterised in that the nipple (6) is made of metal or plastic material.

23. Device according to claim 1, characterised in that the union nut (5) is of metal or plastic material.

## Revendications

1. Dispositif pour relier un tube en matière plastique (1) à section ronde à un autre tube ou à une pièce de raccordement d'autres éléments de construction, comportant un raccord fileté (6) et au moins un écrou-raccord (5) associé à celui-ci, étant précisé qu'il est prévu une bague d'étanchéité (4) à l'intérieur de l'écrou-raccord (5), que l'écrou-raccord (5), la bague d'étanchéité (4) et le raccord fileté (6) présentent chacun un perçage pour le passage d'un tube (1) ou d'une pièce de raccordement, que la bague d'étanchéité (4) se compose d'un matériau facilement déformable élastiquement ou plastiquement et qu'il est prévu entre une bride intérieure (12) de l'écrou-raccord (5), pourvue d'une ouverture intérieure (11) pour un tube (1), et un côté frontal (21) du raccord fileté (6), des surfaces antagonistes planes, et enfin qu'il est également prévu un manchon d'appui non déformé (3) dont la longueur est au moins égale à la largeur axiale de la bague d'étanchéité (4), caractérisé en ce qu'une bride extérieure annulaire (10) d'un manchon de pression (2) est disposée entre le joint d'étanchéité (4) et la bride intérieure (12) de l'écrou-raccord (5), la bride intérieure (12) de l'écrou-raccord (5) glissant sur la bride extérieure (10) du manchon de pression (2).

2. Dispositif selon la revendication 1, caractérisé en ce que le côté extérieur, au moins, du manchon d'appui (3), présente deux sections longitudinales différentes (23, 24).

3. Dispositif selon la revendication 2, caractérisé en ce que l'une des sections longitudinales (24) du côté extérieur du manchon d'appui (3) a une forme cylindrique tandis que l'autre section longitudinale (23) a une forme conique.

4. Dispositif selon la revendication 3, caractérisé en ce que la section longitudinale conique (23), au moins, du côté extérieur du manchon d'appui (3) a une longueur égale à la moitié de la longueur axiale du manchon d'appui (3).

5. Dispositif selon l'une des revendications 3 et 4, caractérisé en ce que la partie de la section longitudinale conique (23) du manchon d'appui (3) qui présente le plus petit diamètre extérieur est tournée vers le côté frontal contigu du manchon d'appui (3).

6. Dispositif selon l'une des revendications 2 à 5, caractérisé en ce que le bord extérieur de l'un au moins des côtés frontaux (25, 26) du manchon d'appui (3) comporte une partie arrondie.

7. Dispositif selon l'une des revendications 2 à 6, caractérisé en ce que le bord intérieur de l'un au moins des côtés frontaux (25, 26) du manchon d'appui (3) comporte une partie arrondie.

8. Dispositif selon l'une des revendications 1 à 7, caractérisé en ce que la bride extérieure annulaire (10) d'un manchon de pression (2) est disposée entre la bague d'étanchéité (4) et la bague intérieure (12) de l'écrou-raccord.

9. Dispositif selon la revendication 2, caractérisé en ce que le côté intérieur de l'ouverture de section transversale continue (27) du manchon d'appui (3) comporte deux sections longitudinales différentes.

10. Dispositif selon la revendication 9, caractérisé en ce que l'une des sections longitudinales du côté intérieur de l'ouverture de section transversale continue (27) a une forme cylindrique, tandis que l'autre a une forme conique.

11. Dispositif selon la revendication 10, caractérisé en ce que les deux sections longitudinales (23, 24) ont à peu près la même longueur axiale.

12. Dispositif selon l'une des revendications 10 à 11, caractérisé en ce que la section intérieure conique de l'ouverture de section transversale (27) est disposée dans le même sens, au-dessous de la section longitudinale conique (23) du côté extérieur du manchon d'appui (3).

13. Dispositif selon l'une des revendications 1 à 12, caractérisé en ce que le bord (9), situé côté frontal, de la bride extérieure (10) du manchon de pression cylindrique (2) comporte une couche de glissement.

14. Dispositif selon l'une des revendications 1 à 13, caractérisé en ce que les bords extérieurs du manchon de pression (2) comportent une partie arrondie.

15. Dispositif selon la revendication 1, caractérisé en ce que le bord intérieur de l'ouverture intérieure (11) de la bride intérieure (12) de l'écrou-raccord (5) qui est tourné vers le filetage intérieur (13) comporte une partie biseautée.

16. Dispositif selon la revendication 1, caractérisé en ce que le diamètre de l'ouverture intérieure (11) de la bride intérieure (12) de l'écrou-raccord (5) est au moins légèrement plus grand que le diamètre extérieur du manchon de pression (2).

17. Dispositif selon la revendication 1, caractérisé en ce que le raccord fileté (6) comporte, sur le côté extérieur (16), au moins une surface d'entraînement.

18. Dispositif selon la revendication 17, caractérisé en ce que la surface d'entraînement est une surface pour clé ou un perçage adapté pour l'action d'une clé.

19. Dispositif selon la revendication 17, caractérisé en ce que la surface d'entraînement est disposée au centre axial entre deux filetages extérieurs (14) du raccord fileté (6).

20. Dispositif selon la revendication 1, caractérisé en ce que l'écrou-raccord (5) comporte, sur le côté extérieur (15), au moins une surface d'entraînement.

21. Dispositif selon la revendication 20, caractérisé en ce que la surface d'entraînement (15) est une surface pour clé ou un perçage adapté pour l'action d'une clé.

22. Dispositif selon la revendication 1, caractérisé en ce que le raccord fileté (6) est en métal ou en matière plastique.

23. Dispositif selon la revendication 1, caractérisé en ce que l'écrou-raccord (5) est en métal ou en matière plastique.
